# EUROPEAN PATENT APPLICATION

(11) **EP 4 794 140 A1**
(43) Date of publication of application: **19.08.2026**
(21) Application number: 25169609.2
(22) Date of filing: 10.04.2025
(51) Int. Cl.: H02G 1/02, H02G 7/00

(54) **METHOD AND SYSTEM FOR FAULT LOCALISATION ON A POWER TRANSMISSION LINE**

(30) Priority: 14.02.2025 IN 202541012574
(71) Applicant: Hitachi Energy Ltd, 8050 Zürich (CH)
(72) Inventor: KUMAR SAHA, Barun, 713212 Durgapur (IN); AMBAN PARAPURATH, Anoop, 560067 Bangalore (IN); NAIDU, Obbalareddi Demudu, 560087 Bangalore (IN)
(74) Representative: Vossius & Partner Patentanwälte Rechtsanwälte mbB

(57) **Abstract**

The present disclosure relates to a method for fault localisation on a power transmission line. The method comprises obtaining an estimated location of a fault on the power transmission line; obtaining, by an unmanned aerial vehicle (UAV) image and/or video and/or audio data of a search area of the power transmission line, wherein the search area includes the estimated fault location; and identifying, by analysis of the image and/or video and/or audio data, a fault location on the power transmission line. The disclosure also relates to a corresponding system.

## Description

The present disclosure relates to a method and system for fault localisation on a power transmission line. The disclosure may further relate to fault detection.

Transmission lines may be subjected to faults due to storms, lightning, snow, freezing rain, insulation breakdown, short circuits by birds, tree contact with a transmission line and other external objects. Transient faults may be self-cleared by reclosing. In case of a permanent fault, however, the line may be energised only after a maintenance crew identifies and replaces the damaged component. For this, a precise fault position should be available since otherwise, the identification task may become tedious and time consuming for high voltage long transmission lines spread over hundreds of kilometres.

Generally, when a fault or disturbance occurs in a power grid, a disturbance record (DR) is generated. DRs are typically generated following the IEEE COMTRADE standard. Based on data available from a DR and other sources, an approximate location of a fault can be estimated. However, contemporary fault localisation algorithms typically result in an error margin in the order of a few kilometres. Consequently, a manual inspection of the target region by field personnel is required to identify the exact fault location, which requires significant time and effort. Therefore, there is a need for an automated and efficient approach for identifying the precise fault location in a timely manner.

This need is met with the features of the present disclosure.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a method for fault localisation on a power transmission line. The method comprises obtaining an estimated location of a fault on the power transmission line; obtaining, by an unmanned aerial vehicle (UAV) image and/or video and/or audio data of a search area of the power transmission line, wherein the search area includes the estimated fault location; and identifying, by analysis of the image and/or video and/or audio data, a fault location on the power transmission line.

Various embodiments may preferably implement the following features.

Preferably, the method further comprises obtaining disturbance data of the power transmission line; and obtaining, based on the disturbance data, the estimated location of the fault. Preferably, the estimated location of the fault and/or the search area is obtained from an external source.

Preferably, the analysis of the image and/or video and/or audio data is performed by a fault identification algorithm.

Preferably, the fault identification algorithm is an Al-classifier, preferably a pre-trained Al classifier.

Preferably, the Al classifier is a machine learning, ML, or deep learning, DL, classifier, preferably deep neural network, DNN, convolutional neural network, CNN, large language model, LLM, Vision Transformer, or Vision Language Model.

Preferably, the analysis of the image and/or video data comprises an image segmentation to separate a background of the image and/or video from the power transmission line and/or a power transmission line equipment and/or pylons.

Preferably, the disturbance data comprises at least one disturbance record, DR, and/or IEEE COMTRADE file.

Preferably, the UAV autonomously travels along the power transmission line. Preferably, the UAV travels to the estimated fault location based on a predefined travel path. Preferably, the UAV autonomously travels in the search area.

Preferably, the identification of the fault location is performed on-board on the UAV, and/or on a processing device and/or on a server.

Preferably, the method further comprises transmitting the fault location to an external device, preferably to an external device of a maintenance crew and/or service personnel.

The present disclosure further relates to a method for asset management using the method as outlined above.

The present disclosure further relates to a system comprising an unmanned aerial vehicle, UAV, the UAV comprising at least one sensor for obtaining image and/or video and/or audio data; and at least one processor configured to perform the method as described above.

Preferably, the at least one processor is provided on the UAV and/or a server.

The present disclosure further relates to a non transitory computer-readable storage medium comprising instructions which, when executed by a processor, configure the processor to perform the method as outlined above.

The present disclosure further relates to a computer program product comprising instructions which, when executed by a processor, configure the processor to perform the method as described above.

Other aspects, features, and advantages will be apparent from the summary above, as well as from the description that follows, including the figures and the claims.

Embodiments of the present disclosure will now be described by way of example only and with reference to the following accompanying drawings. In the figures, the same reference numerals denote the same or similar elements.
Fig. 1 is a flow chart of an embodiment according to the present disclosure.
Fig. 2 is a depiction of a search scenario according to an embodiment of the present disclosure.

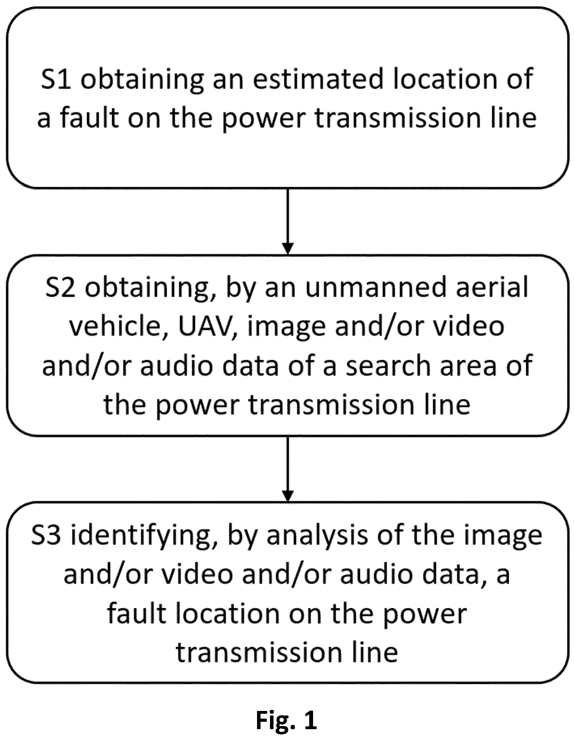

Fig. 1 shows an exemplary flow chart according to an embodiment of the present disclosure. In particular, Fig. 1 shows a method for fault localisation on a power transmission line comprising obtaining S1 an estimated location of a fault on the power transmission line, obtaining S2, by an unmanned aerial vehicle (UAV) image and/or video and/or audio data of a search area of the power transmission line, wherein the search area includes the estimated fault location and identifying S3, by analysis of the image and/or video and/or audio data, a fault location on the power transmission line.

Step S1 may also comprise obtaining, in addition to the estimated fault location, a search area. The search area may be set according to the estimated fault location (e.g., depending on its topology), or may comprise a predetermined area (e.g., a radius) around the estimated fault location.

In an embodiment, the method further comprises obtaining disturbance data of the power transmission line; and obtaining, based on the disturbance data, the estimated location of the fault. Preferably, the estimated location of the fault and/or the search area is obtained from an external source.

In an embodiment, the analysis of the image and/or video and/or audio data is performed by a fault identification algorithm.

In an embodiment, the fault identification algorithm is an Al-classifier or may be a pre-trained AI classifier.

In an embodiment, the Al classifier is a machine learning, ML, or deep learning, DL, classifier, preferably deep neural network, DNN, convolutional neural network, CNN, large language model, LLM, Vision Transformer, or Vision Language Model.

In an embodiment, the analysis of the image and/or video data comprises an image segmentation to separate a background of the image and/or video from the power transmission line and/or a power transmission line equipment and/or pylons.

In an embodiment, the disturbance data comprises at least one disturbance record, DR, and/or IEEE COMTRADE file.

In an embodiment, the UAV autonomously travels along the power transmission line. Preferably, the UAV travels to the estimated fault location based on a predefined travel path. Preferably, the UAV autonomously travels in the search area.

In an embodiment, the identification of the fault location is performed on-board on the UAV, and/or on a processing device and/or on a server.

In an embodiment, the method further comprises transmitting the fault location to an external device, preferably to an external device of a maintenance crew and/or service personnel.

The present disclosure further relates to a corresponding method for asset management using the method as outlined above.

The present disclosure further relates to a system comprising an unmanned aerial vehicle, UAV, the UAV comprising at least one sensor for obtaining image and/or video and/or audio data; and at least one processor configured to perform the method as described above.

The at least one processor may be provided on the UAV and/or a server.

The present disclosure further relates to a non-transitory computer-readable storage medium comprising instructions which, when executed by a processor, configure the processor to perform the method as outlined above.

The present disclosure further relates to a computer program product comprising instructions which, when executed by a processor, configure the processor to perform the method as described above.

According to an embodiment of the present disclosure, the identification of a fault's location is performed by sending a UAV. Thereby, an accurate fault location can be found quickly and efficiently. The UAV may be equipped with relevant sensors (camera, microphone, GPS, gyroscope, etc.), necessary data and algorithms, as well as communication interfaces. An exemplary search may be conducted as follows. The UAV is sent to an initial, estimated fault location. The fault location may be estimated based on, e.g., a disturbance record (DR), a fault location algorithm, or grid data. The estimated fault location may be automatically determined or may be obtained from an external source. Starting from that estimated point, the UAV autonomously navigates the area, investigating the power transmission line, e.g., a sequence of towers one by one, until a fault is identified or the search range is exceeded. In particular, the UAV captures images/video/audio of a tower (e.g. a transmission tower) and its surrounding area. The present disclosure is not limited to (transmission) towers and may be applied to any structure of a power grid, where faults may be present. This data is processed using a fault identification (classification) algorithm. The identification may be performed on-board or on a (cloud) server. If no fault condition is detected, the UAV moves to the next tower for inspection.

In an embodiment, the UAV can travel to the estimated fault location using a pre-computed/pre-defined path. Further, the UAV may autonomously navigate the search area by computing the waypoints based on its current location. In other words, these waypoints are not pre-computed but rather generated on the spot. The UAV may also travel the search area in a randomised manner.

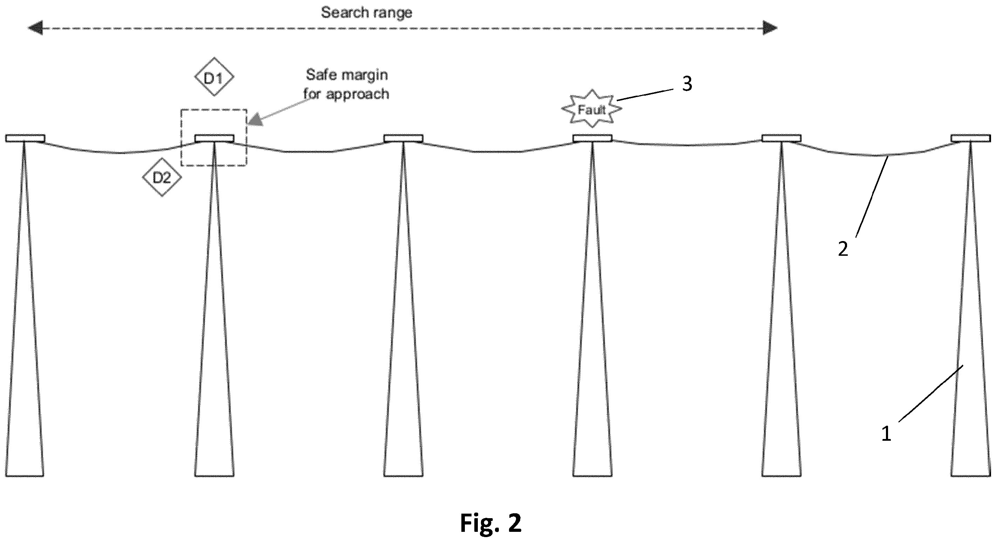

An exemplary search procedure is depicted in Fig. 2 showing a power transmission line 2 supported by a plurality of pylons 1 or (transmission) towers. The fault 3 is indicated by a star-shaped block. The search range is indicated by a dashed line and comprises, in that example, five pylons 1. Moreover, each pylon 1 may have a safety margin for approach (see dashed box) which restricts a proximity of the UAV with respect to the pylon 1. I.e., the UAV may not come closer to the pylon 1. The safety margin may be pre-set. The safety margin may be generally pre-set, pre-set for all pylons 1 or pre-set for particular elements of a power transmission line or a grid.

Thus, the UAV, on reaching the estimated fault location, approaches the pylon 1 at a safe distance. The UAV captures an audio-visual state of the pylon 1, for example, images and video, for analysis. The state may be captured from different positions, such as a top-view and/or a side-view. In Fig. 2, the blocks D1 and D2 indicate different approaching positions or angles from which the UAV obtains the image/video/audio data. The audio-visual state may capture the condition of the concerned pylon as well as the cables connected to the pylon.

Once the pylon's 1 state is captured, the UAV runs an on-board visual fault identification algorithm to identify the physical nature of the fault or to determine that no fault is present at the current location. This visual fault identification algorithm can be a pre-trained Al classifier, which identifies the nature of a fault based on one or more images. The identification may also be performed externally on a (cloud) server, or a computing device. A fault may be found on a pylon, on a cable, both, or none. In case no fault is found at the current location, the UAV computes the next location (GPS coordinates) to visit, based on its current location.

When the UAV identifies a fault at a location, it collates all relevant data, such as image, DR data, and analysis result, together (e.g., as a report). Next, the UAV may obtain current locations of available field personnel. Subsequently the UAV sends the report to the nearest field personnel via the Internet (or possibly a Wireless Mesh Network, if available). Alternatively, the UAV can upload the report to an application server running on the cloud or a central server. In that case, said application may relay the report to the field personnel.

The data may also be sent directly to a maintenance crew.

Possible fault cases may be one of a pylon fault such as a fire, broken insulator, tree branch, ash cloud or no fault. Further, the fault cases may be one of a cable fault such as a broken cable, a cable joint failure, a fire or no fault.

A visual fault identification algorithm can be a pre-trained Machine Learning (ML) or Deep Learning (DL) classifier (in the following also denoted as Al classifier). The Al classifier may be trained from scratch using relevant images from a power grid transmission system, indicating both normal and fault scenarios. Traditional ML classification approaches, such as Support Vector Machines and Decision Trees, may be used for this purpose. Alternatively, the Al classifier could be a Deep Neural Network (DNN), such as a Convolutional Neural Network (CNN), trained from scratch. Alternatively, the Al classifier could be a vision model architecture known in the prior art, such as ImageNet and MobileNet, whereby such a vision model is used as it is, fine-tuned with an additional set of images, or the features generated by the vision model are used to separately train a classifier. Alternatively, the Al classifier can be based on a Vision Transformer architecture. Alternatively, the Al classifier could be a Vision Language Model, such as PaliGemma, accompanied by one or more descriptive/prescriptive prompts in natural language to identify faults from an image.

The visual fault identification AI classifier may infer, i.e., detect, the fault condition (fault type), by using a single image, multiple images combined together, or sequentially one-by-one from a set of multiple images. The Al classifier may also be a DNN trained to classify videos. The Al classifier may be a multi-class classifier so that multiple, concurrent faults, if any, at any location may be identified.

In the following, an exemplary design of an Al classifier to identify the physical nature/cause of a fault based on their images using MobileNet [see, e.g., Andrew G. Howard et al., "MobileNets: Efficient Convolutional Neural Networks for Mobile Vision Applications", 17 April 2017] is described. This example, however, is not to be understood as limiting. That is, the description is merely an example of realising the fault classification. In practice, different CNN models (such as ImageNet) and/or input modalities (such as video and audio) may also be used.

MobileNet is a DNN consisting of 28 layers, including its depth-wise and point-wise convolution layers. The final layer is a softmax layer with 1000 classification heads. MobileNet can run efficiently on mobile and embedded devices, where the computational capacity is constrained.

A set images of pylons and cables collected by UAVs from different angles and depth under different fault scenarios as well as no-fault scenarios is considered for training. These images primarily capture a view of the pylons and cables attached to it, possibly with some of their surroundings. In addition, relevant transformations, such as rotation, may be applied to one or more images to generate new images and augment the original dataset. Each image file in the dataset may be manually annotated with its fault condition(s)/fault type(s) (alternatively, labels). Since this is a multiclass, multilabel classification problem, a data point may have multiple labels, for example, broken cable and pylon fire.

In particular, an image is fed to MobileNet and the output of its penultimate layer-which generates a feature vector-is considered. Subsequently, Principal Component Analysis (PCA) is performed in order to reduce the dimension of the feature vector. Finally, the dimensionality-reduced feature vector is normalised. The process is repeated for all the images in the dataset. These features are stored in a database for future use.

Subsequently, an Extreme Gradient Boosting (XGBoost) classifier is trained based on the extracted features and the corresponding labels. The classifier so trained, along with MobileNet, is deployed on the UAVs.

During inference time on any UAV, one or more images of the pylons and cables taken by the UAVs are considered. These images are fed to MobileNet to extract the relevant features. These are compressed using PCA and then normalised. In an example, it is considered that n such images are used to run inference, where n is an odd number. A majority voting is used to identify the target label(s) based on the label(s) identified for each label. In case two labels lead to a tie, both the labels are retained and reported.

It may be noted that XGBoost is merely used as an example here. One may replace it with any other suitable classification algorithm.

As noted above, in case the on-board image processing algorithms result in a classification accuracy below a pre-defined threshold, the UAV may upload the relevant audio-visual data to the cloud or central server. Then, a stronger Al classifier running on the cloud runs the classification algorithm on the input images, possibly of higher resolution, and communicates the results back to the UAV.

According to the present disclosure, an efficient and fast determination of an exact fault location is provided. That is, the disclosure provides for reduced time and effort in finding a fault's accurate location. This also reduces the time for primary response time to a fault and increases safety.

Moreover, the downtime of power line may be minimised. Further, the present disclosure may lead to a reduced penalty, which is based on the duration of a fault/blackout.

For fault location determination, no human supervision or interaction is necessary. The presented method is energy efficient and ensures privacy of the grid operator by providing the possibility of performing the fault identification on-board.

Unless explicitly indicated otherwise, all embodiments disclosed herein are compatible with each other.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organisation.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. Method for fault localisation on a power transmission line, the method comprising:
obtaining (S1) an estimated location of a fault on the power transmission line;
obtaining (S2), by an unmanned aerial vehicle, UAV, image and/or video and/or audio data of a search area of the power transmission line, wherein the search area includes the estimated fault location; and
identifying (S3), by analysis of the image and/or video and/or audio data, a fault location on the power transmission line.

2. Method according to claim 1, further comprising:
obtaining disturbance data of the power transmission line; and
obtaining, based on the disturbance data, the estimated location of the fault, or
wherein the estimated location of the fault and/or the search area is obtained from an external source.

3. Method according to claim 1 or 2, wherein the analysis of the image and/or video and/or audio data is performed by a fault identification algorithm.

4. Method according to claim 3, wherein the fault identification algorithm is an Al-classifier, preferably a pre-trained Al classifier.

5. Method according to claim 4, wherein the Al classifier is a machine learning, ML, or deep learning, DL, classifier, preferably deep neural network, DNN, convolutional neural network, CNN, large language model, LLM, Vision Transformer, or Vision Language Model.

6. Method according to any one of claims 1 to 3, wherein the analysis of the image and/or video data comprises an image segmentation to separate a background of the image and/or video from the power transmission line and/or a power transmission line equipment and/or pylons.

7. Method according to any one of claims 2 to 6, wherein the disturbance data comprises at least one disturbance record, DR, and/or IEEE COMTRADE file.

8. Method according to any one of claims 1 to 7, wherein the UAV autonomously travels along the power transmission line, wherein preferably:
the UAV travels to the estimated fault location based on a predefined travel path; and/or
the UAV autonomously travels in the search area.

9. Method according to any one of claims 1 to 8, wherein the identification of the fault location is performed on-board on the UAV, and/or on a processing device and/or on a server.

10. Method according to any one of claims 1 to 9, wherein the method further comprises transmitting the fault location to an external device, preferably to an external device of a maintenance crew and/or service personnel.

11. Method for asset management using the method according to any one of claims 1 to 10.

12. System comprising:
an unmanned aerial vehicle, UAV, the UAV comprising at least one sensor for obtaining image and/or video and/or audio data; and
at least one processor configured to perform the method according to any one of claims 1 to 11.

13. System according to claim 12, wherein the at least one processor is provided on the UAV and/or a server.

14. Non transitory computer-readable storage medium comprising instructions which, when executed by a processor, configure the processor to perform the method according to any one of claims 1 to 11.

15. Computer program product comprising instructions which, when executed by a processor, configure the processor to perform the method according to any one of claims 1 to 11.
